# EUROPÄISCHE PATENTSCHRIFT

(11) **EP 2 300 288 B1**
(45) Veröffentlichungstag und Bekanntmachung des Hinweises auf die Patenterteilung: **14.10.2015**
(21) Anmeldenummer: 09772327.4
(22) Anmeldetag: 18.06.2009
(51) Int. Cl.: B60T 8/36, B60T 7/10, B60T 13/68, H02H 5/10

(54) **BREMSENSTEUERGERÄT ZUR ANSTEUERUNG UND/ODER REGELUNG VON AKTUATOREN ZUR BEEINFLUSSUNG EINER BREMSFUNKTION EINES KRAFTFAHRZEUGS**
BRAKE CONTROL DEVICE FOR DRIVING AND/OR CONTROLLING ACTUATORS FOR INFLUENCING A BRAKING FUNCTION OF A MOTOR VEHICLE
ORGANE DE COMMANDE DE FREIN PERMETTANT DE COMMANDER ET/OU RÉGLER DES ACTIONNEURS POUR INFLUENCER UNE FONCTION DE FREINAGE D UN VÉHICULE À MOTEUR

(30) Priorität: 01.07.2008 DE 102008030670; 17.06.2009 DE 102009025674
(43) Veröffentlichungstag der Anmeldung: 30.03.2011
(73) Patentinhaber: Continental Teves AG & Co. oHG, 60488 Frankfurt (DE)
(72) Erfinder: HEISE, Andreas, 64390 Erzhausen (DE); STREHLE, Christian, 70376 Stuttgart (DE)
(86) Internationale Anmeldenummer: PCT/EP2009/057621
(87) Internationale Veröffentlichungsnummer: WO 2010/000627

(56) Entgegenhaltungen:
- EP-A- 1 826 450
- EP-A- 1 916 168
- EP-B- 1 049 611
- WO-A-99/48738
- WO-A-2004/108497
- DE-A1- 4 342 871
- DE-A1- 19 715 024
- DE-A1- 19 732 229
- DE-A1- 19 826 130
- DE-A1-102004 008 935
- DE-A1-102004 015 447
- US-A- 5 139 315

## Beschreibung

Die Erfindung betrifft ein Bremsensteuergerät gemäß Oberbegriff von Anspruch 1.

Elektronische Bremsensteuergeräte zur Steuerung und/oder Regelung von Bremsfunktionen in einem Kraftfahrzeugbremssystem, wie z.B. Antiblockierfunktion (ABS: Antiblockiersystem) oder Fahrdynamikregelfunktion (ESC: Electronic Stability Control), sind beispielsweise aus der DE 101 22 954 A1 an sich bekannt. Aus der genannten Schrift geht ferner hervor, dass durch die mehrfache Ausführung von Versorgungsleitungen bzw. -anschlüssen für Brake-by-wire Steuergeräte eine erhöhte Verfügbarkeit der Energieversorgung einzelner Funktionen bzw. der Gesamtfunktion im Falle von Fehlern auf den Versorgungsleitungen erzielt werden kann.

Weiter verbreitet sind jedoch elektronische Bremsensteuergeräte für herkömmliche hydraulische, also keine Brake-by-wire, Bremssysteme, die lediglich einen Anschluss für eine Plus-Versorgungsleitung für den Motor einer Hydraulikpumpe, einen Anschluss für eine weitere Plus-Versorgungsleitung für die elektrohydraulischen Ventile, und - falls nicht mit der letzt genannten mitversorgt - einen weiteren Anschluss für eine Plus-Versorgungsleitung für den Logikschaltkreis (Mikrokontroller etc.) des Steuergerätes umfassen. Weiterhin ist in der Regel ein Anschluss für eine Masseleitung (GND) vorhanden.

Neben den elektronischen Bremsensteuergeräten für die Betriebsbremse eines Kraftfahrzeugs sind außerdem von den Bremsensteuergeräten getrennte elektronische Steuereinheiten für eine elektrische Feststellbremse bekannt. Aus Gründen der Sicherheit verfügen diese Steuereinheiten zum Teil über eine oder auch mehrere Anschlüsse für Plus-Versorgungsleitungen. Es sind auch entsprechende Steuereinheiten bekannt, bei denen auch die Masse-Versorgungsleitung durch entsprechende Masseanschlüsse mehrfach ausgeführt ist.

Weitere Bremsensteuergeräte sind aus der EP1049611B1, DE102004015447A1, EP1826450A2, US5139315A, WO99/48738A1, WO2004/108497A2, DE19732229A1, EP1916168A1 und DE19826130A1 bekannt.

Der Erfindung liegt daher die Aufgabe zugrunde, ein verbessertes Bremsensteuergerät bereitzustellen, welches sowohl die Funktionen einer an sich bekannten elektronischen Feststellbremssteuereinheit mit den wesentlichen Steuer- und/oder Regelfunktionen einer Betriebsbremse so in einem gemeinsamen Gerät zusammenfasst, dass sich Vorteile gegenüber jeweils für die Funktionen getrennter Steuergeräte bzw. -einheiten ergeben.

Diese Aufgabe wird erfindungsgemäß durch das Bremsensteuergerät gemäß Anspruch 1 gelöst.

Erfindungsgemäß umfasst das Bremsensteuergerät, welches zur Ansteuerung und/oder Regelung von Aktuatoren zur Beeinflussung einer Bremsfunktion eines Kraftfahrzeugs vorgesehen ist, mindestens einen Logikschaltkreis, zum Beispiel mit einem redundanten, insbesondere mehrkernigen Mikrocontroller, mit dem mindestens eine Bremsfunktion gesteuert und/oder geregelt wird.

Das erfindungsgemäße Steuergerät ist als Kombinationssteuergerät, also zur Steuerung/Regelung mehrerer Fahrzeug-Funktionsgruppen konzipiert, so dass dieses mindestens eine Funktion eines elektronischen Bremssystems als auch eine Feststellbremsfunktion umfasst bzw. steuert/regelt. Durch die Integration zweier Funktionsgruppen bzw. Steuersysteme in ein Steuergerät werden vorteilhafterweise zumindest die sonst doppelt genutzten Bauelemente und/oder Anschlüsse eingespart, wie z.B. separate Versorgungsanschlüsse für Versorgungsleitungen (erster oder zweiter Art) oder auch der zweite Logikschaltkreis der Feststellbremse. Eine Aggregation der des Feststellbremssteuereinheit mit dem Bremsensteuergerät zu einem Gesamtsteuergerät und damit auch der Übernahme von getrennten Versorgungsleitungen bzw. -anschlüssen beider Systeme würde, unter Beibehaltung der Verfügbarkeit wie bei getrennten Steuergeräten bzw. -einheiten, zu recht voluminösen und damit nachteilhaften Verbindungssteckern des Gesamtsteuergeräts führen. Außerdem führt das Vorhandensein mehrerer GND-Anschlüsse, welche bei einer einfachen Aggregation nur Teilbereiche der Schaltung versorgen, zu nicht unerheblichem Schaltungsaufwand, wenn ein Masse-Abriss (GND-Abrisses) erkannt werden soll.

Gemäß der Erfindung umfasst das Bremsensteuergerät elektrische Versorgungsanschlüsse zumindest erster Art und zweiter Art. Dabei ist/sind der/die Versorgungsanschluss/-üsse erster Art mit einem Bezugspotential verbunden. Mindestens ein Versorgungsanschluss zweiter Art ist mit einem gegenüber dem Bezugspotential verschiedenen Potential (oder auch mehrere verschiedene Potentiale, die vom Bezugspotential verschieden sind) verbunden. Weiterhin ist mindestens ein Versorgungsanschluss erster Art oder mindestens ein Versorgungsanschluss zweiter Art zur Versorgung
- mit mindestens einem Funktionselement oder -gruppe zur Ansteuerung und/oder Regelung der Funktion des elektronischen Bremssystems und mit mindestens einem Funktionselement zur Ansteuerung und/oder Regelung der Feststellbremsfunktion, und/oder
- mit mindestens einem Funktionselement oder -gruppe zur Ansteuerung und/oder Regelung der Funktion des elektronischen Bremssystems und der Feststellbremsfunktion elektrisch verbunden.

Das heißt, vorzugsweise ist die Anzahl der Versorgungsanschlüsse der ersten Art geringer als die Anzahl der im Steuergerät normalerweise, bei einer nicht integrierten Ausgestaltung, vorhandenen Funktionsgruppen und/oder die Anzahl der Versorgungsanschlüsse zweiter Art ist geringer als die Anzahl der für eine Funktionsgruppe bei nicht integrierter Ausgestaltung benötigten Anschlüsse.

Unter einem Versorgungsanschluss wird bevorzugt ein insbesondere vom Steuergerät nach außen geführter Kontaktpunkt oder ein elektrischer Verbinder für eine Versorgungsleitung oder eine Kontaktklemme oder ein Versorgungspfad verstanden. Das vorstehend beschriebene erfindungsgemäße Bremsensteuergerät ist vorteilhaft, weil die Anzahl der Versorgungsanschlüsse und/oder der benötigten Schaltungselemente gegenüber einer getrennten Realisierung der mindestens zwei Funktionsgruppen (z.B. Feststellbremse und Betriebsbremsensteuerung) Systeme merklich verringert ist. Dabei ist die Verfügbarkeit, zum Beispiel bei einem Versorgungsleitungsabriss oder einem Fehler auf einer der Versorgungsleitungen gegenüber Einzelsysteme zumindest gleich oder sogar höher. Bei einem Leitungsabriss bzw. einem Fehler auf einer der Versorgungsleitungen fällt auf Grund der oben beschriebenen Anschluss- bzw. Leitungsanordnung niemals das Steuergerät insgesamt aus, sondern lediglich ggf. Teilfunktionen, die die Bereitstellung des Leistungskreis einiger Funktionen betrifft, oder eine ganze Funktionsgruppe. Die Funktionalität eines gemeinsam genutzten Logikschaltkreis gemeinsam mit zumindest einem Leistungskreis einer Funktion ist jedoch bei einem Einzelleitungsfehler in der Regel nicht betroffen.

Vorzugsweise umfasst das Steuergerät aktive oder passive elektronische Umschaltmittel zur Umschaltung zwischen einzelnen Versorgungsanschlüssen innerhalb einer Art, wie beispielsweise Dioden, bipolare Transistoren, FETs oder sonstige elektronische Schalter.

Bevorzugt ist das Bremsensteuergerät zur Ansteuerung von elektrischen und/oder elektromechanischen und/oder hydraulischen Bremsenkomponenten vorgesehen. Das Bremsensteuergerät dient zur direkten oder indirekten Ansteuerung und/oder Regelung von mindestens einem Aktuator, wie z.B. mindestens einem Ventil und/oder einem Elektromotor etc., zur Beeinflussung der Normal- bzw. Betriebsbremsfunktion und der darin üblichen Regelfunktionen (z.B. ABS- oder ESP-Steuergerät) eines Kraftfahrzeuges, welches neben der Einflussname auf die Betriebsbremsfunktion auch die Ansteuerung einer Feststellbremsfunktion steuert. Die Feststellbremsfunktion ist dabei auf grundsätzlich an sich bekannte Weise elektromechanisch und/oder hydraulisch realisiert. Das Steuergerät umfasst eine oder mehrere Masseanschlüsse sowie ein oder mehrere Plusanschlüsse zur Versorgung. Dabei wird zumindest ein gleicher Masse- und/oder Plusanschluss zur Versorgung sowohl von Feststellbrems- als auch Betriebsbremssteuergerätefunktionen verwendet. Ausfälle einzelner jeweils mit den Anschlüssen verbundener Versorgungsleitungen ziehen dabei entweder keinen Ausfall von Funktionen oder Teilfunktionen nach sich oder nur Ausfälle von Teilfunktionen, wie z.B. Normalbremsfunktion, ABS- oder ESP-Funktion oder Feststellbremsfunktion.

Das Bremsensteuergerät umfasst erfindungsgemäß zumindest einen Logikschaltkreis (z.B. der Mikroprozessor des Bremssystems), welcher gemäß einer weiteren bevorzugten Ausführungsform über zwei oder mehrere Versorgungsanschlüsse jeweils erster oder zweiter Art versorgt wird, so dass bei Ausfall einer der daran angeschlossenen Versorgungsleitungen der Logikschaltkreis weiter versorgt ist.

Das Bremsensteuergerät umfasst bevorzugt weiterhin zumindest einen Versorgungsanschluss für den Motor einer Hydraulikpumpe, welche zusätzlich als Versorgungsanschluss für die elektrische oder elektrohydraulische Feststellbremse genutzt wird, wobei insbesondere bei Ausfall einer daran angeschlossenen Versorgungsleitung eine Versorgung der Feststellbremse über einen anderen Versorgungspfad erfolgt.

Gemäß einer weiteren bevorzugten Ausführungsform des Bremsensteuergeräts wird der Versorgungsanschluss der elektrohydraulischen Ventile des Bremsensteuergerätes gleichzeitig als Versorgungsanschluss für eine integrierte elektrische Feststellbremse genutzt, wobei insbesondere bei Ausfall der daran angeschlossenen Versorgungsleitung eine Versorgung der Feststellbremse über einen anderen Versorgungspfad erfolgt.

Gemäß einer weiteren bevorzugten Ausführungsform wird der Versorgungsanschluss der Steuer/Regelelektronik des Bremsensteuergerätes gleichzeitig als Versorgungsanschluss für eine integrierte elektrische Feststellbremse genutzt, wobei insbesondere bei Ausfall einer daran angeschlossenen Versorgungsleitung eine Versorgung der Feststellbremse über einen anderen Versorgungspfad erfolgt.

Vorzugsweise erfolgt die Spannungsversorgung des mindestens einen Logikschaltkreises (z.B. des zentralen Mikroprozessors) entweder über mindestens zwei oder drei Versorgungsanschlüsse, zwischen denen im Bedarfsfall (Fehler) aktiv (z.B. über aktive Halbleiter-Bauelemente) oder passiv (z.B. mit einer Diodenanordnung) umgeschaltet wird, oder über eine ständige Versorgung mit mindestens zwei oder drei Versorgungsanschlüssen, insbesondere ODER-verknüpft (z.B. mittels Dioden).

Gemäß einer weiteren bevorzugten Ausführungsform des Bremsensteuergeräts umfasst dieses an die Versorgungsleitungen bzw. der entsprechenden Versorgungsanschlüsse zweiter Art angeschlossene Hochstrompfade, welche die Leistungskomponenten, wie z.B. Motore für die elektromechanische oder - hydraulische Feststellbremse, elektromagnetische Ventile oder die Hydraulikpumpe des Bremssystems, versorgen, wobei innerhalb des Steuergeräts zumindest in einem oder auch in mehreren oder allen Hochstrompfaden, insbesondere redundante, elektronische Abschaltelemente (Maintreiber u. Ventiltreiber) vorgesehen sind, um bei einem Fehlerfall in einem Pfad (z.B. bei einem Kurzschluss) die Funktion eines anderen Versorgungspfads nicht zu beeinträchtigen oder zu verhindern. Durch Abschalten des fehlerhaften Pfads kann der Betrieb der nicht defekten Komponente somit aufrechterhalten werden. In manchen Fällen ist es besonders vorteilhaft möglich, bereits vorhandene aktive Bauelemente der abzuschaltenden elektronischen Funktionsgruppe zur Abschaltung des fehlerhaften Pfads einzusetzen. Dies ist zum Beispiel bei Verwendung einer an sich bekannten H-Brücke zur Motoransteuerung mit drei Phasen möglich.

Das Bremsensteuergerät umfasst bevorzugt mindestens zwei Masseversorgungsanschlüsse oder -pfade, von denen jeder hinsichtlich der Stromtragfähigkeit so ausreichend dimensioniert ist, dass das gesamte Steuergerät im zulässigen Versorgungsspannungsbereich hinreichend versorgt werden kann. Das heißt, es ist möglich, dass einer der Masseversorgungsanschlüsse oder -pfade entweder nur für eine begrenzte Zeit die volle Verfügbarkeit ermöglicht oder aber lediglich eine Verfügbarkeit des Steuergeräts oder der Funktionskomponente/n (z.B. Bremsfunktion oder Feststellbremsfunktion sowie deren Ansteuerung/-en) mit Funktionseinschränkungen erlaubt.

Vorzugsweise übernimmt bei einem Abriss oder einer Unterbrechung einer an einem der vorstehend beschriebenen Anschlüsse angeschlossenen Masseleitungen der/die verbleibende(n) Masseanschluss/-üsse die Funktionalität in der Weise, dass es zu keinen bzw. zu keinen wesentlichen Funktionseinschränkungen des Steuergerätes kommt. Somit kann oder muss ein Abriss oder eine Unterbrechung einer Masseleitung im beispielgemäßen Steuergerät nicht zwingend erkannt oder detektiert werden. Innerhalb des Bremsensteuergeräts sind die Masseanschlüsse im Steuergerät zweckmäßigerweise über elektronische Leistungsbauelemente, wie z.B. Dioden, antiparallele Dioden, Halbleiterschalter, FETs oder ohmsche Widerstände, besonders zweckmäßig niederohmige Widerstände oder speziell ausgelegte bzw. konstruierte Widerstandsleiterbahnen, miteinander verbunden. Dabei ist es besonders zweckmäßig, wenn der Spannungsabfall an einer oder mehreren dieser verbindenden Leistungsbauelemente genutzt wird, einen Fehler innerhalb der Leistungsversorgung zu erkennen.

Bevorzugt umfasst das Steuergerät außerdem eine Erkennungsschaltung, welche insbesondere in einem weiter unten beschriebenen Anschlussmultiplexer integriert ist, mit der eine Unterbrechung in einer oder mehreren Versorgungsleitungen erster oder zweiter Art detektiert wird. Im Falle von verbindenden Leistungsschaltern wie FETs hat es sich als besonders sinnvoll erwiesen, diese gezielt mit der Erkennungsschaltung so zu schalten, dass Fehler in der Spannungsversorgung erkennbar werden.

Das oben beschriebene Prinzip der Verbindung der Masseanschlüsse mit den oben definierten elektronischen Leistungsbauelementen oder auch Widerstandsleiterbahnen lässt sich nach einer weiteren oder alternativ bevorzugten Ausführungsform auch auf die Versorgungsanschlüsse zweiter Art mit einem positiven Bezugspotential übertragen. Demzufolge sind die entsprechenden Plus-Anschlüsse im Steuergerät beispielsweise mittels Dioden, antiparallelen Dioden, Halbleiterschaltern, FETs oder ohmschen Widerstände, insbesondere entsprechend ausgelegter Leiterbahnen, miteinander verbunden.

Auch hier kann mit der gesonderten Prüfeinrichtung zweckmäßigerweise der jeweils gemessene Spannungsabfall an diesen Leistungskomponenten zur Fehlererkennung in der Versorgung genutzt werden oder es können Schalter oder Leistungsschalter gezielt so geschaltet werden, dass Fehler in der Versorgung erkennbar sind.

Gemäß einer besonders bevorzugten Ausführungsform sind die Masseversorgungen im Steuergerät unmittelbar, also ohne Verbindungsbauelemente, miteinander verbunden.

Gemäß einer ganz besonders bevorzugten Ausführungsform sind die Versorgungsanschlüsse einer Art untereinander nicht durch elektronische Leistungsbauelemente sondern durch elektronische Kleinleistungsbauelemente verbunden, welche nicht dauerhaft den Laststrom eines Leistungsverbrauchers tragen können bzw. durch den Strom überlastet wären. Der mögliche bzw. zulässige Strom durch die Kleinleistungsbauelemente reicht jedoch immerhin aus, um den zumindest einen Logikschaltkreis zu versorgen.

Vorteilhafterweise kann das Bremsensteuergerät so beschaffen werden, dass bei einem detektierten Ausfall einer Versorgungsleitung (z.B. Unterbrechung der Sicherung oder der Leitung) die Funktionalität des Steuergerätes ganz oder teilweise erhalten bleibt. Es ist zweckmäßig, einen Ausfall oder einen Defekt einer Versorgungsleitung vom Steuergerät als Störung auch dann auszugeben (z.B. für eine Fahrerwarnung), wenn dabei die Funktionalität des Steuergeräts voll erhalten bleibt. Die Ausgabe der Störung kann an den Fahrer und/oder an eine Einrichtung zur Speicherung einer Störung weitergeleitet werden. Die Einrichtung zur Speicherung der Störung ist bevorzugt so ausgelegt, dass die Störung zusätzlich oder ausschließlich bei einem Werkstattaufenthalt ausgelesen werden kann.

Alternativ, insbesondere aber zusätzlich kann zweckmäßigerweise eine Anzeige der Störung an den Fahrer erfolgen und/oder es ist ein Speicher- und Auslesemittel vorgesehen, welches ermöglicht, eine Störungsinformation bei einem Werkstattbesuch auszulesen.

Besonders vorteilhaft ist es, wenn das Bremsensteuergerät so ausgelegt wird, dass bei einem detektierten Ausfall einer Versorgungsleitung (z.B. Unterbrechung einer im Pfad angeordneten Sicherung oder der Leitung selbst) die volle Funktionalität des Steuergerätes zunächst mit oder ohne Fahreranzeige oder Fehlerspeicherung erhalten bleibt, danach eine, insbesondere schrittweise, funktionelle Degradation (z.B. Abschalten der ASR Funktionalität, der ESP Funktionalität etc.) durchgeführt wird mit dem Ziel, den Fahrer zumindest einige Zeit mit der Komfort- oder Regelfunktionen zu bedienen, zumindest so lange, bis eine Werkstatt erreicht wird, oder alternativ oder zusätzlich ein Fahrersignal auszugeben (z.B. eine Serviceintervallanzeige), welche insbesondere bei jedem Fahrzeugneustart erscheint.

Das Bremsensteuergerät umfasst nach einer weiteren bevorzugten Ausführungsform einen Anschlussmultiplexer, welcher einen Versorgungspfad von Versorgungsanschlüssen erster oder zweiter Art trennt und/oder diesen mit diesen Versorgungsanschlüssen verbindet und/oder für eine Verteilung des Stroms auf die verbliebenen, verfügbaren Versorgungsanschlüsse einer Art sorgt. Im einfachsten Fall, gemäß einer besonders zweckmäßigen Ausführungsform, ist der Anschlussmultiplexer lediglich eine Anordnung von Dioden und/oder Widerständen, insbesondere Leiterbahnabschnitte, mit einer nicht geschalteten Aufteilung des Stroms auf die entsprechenden Versorgungsanschlüsse.

Gemäß einer weiteren bevorzugten Ausführungsform sind die Masseversorgungsleitung außerhalb des Steuergeräts mehrfach in Form einer oder mehrerer Einzelleitungen konzipiert, die an separate Masseanschlüsse des Steuergeräts herangeführt sind, jedoch werden die Leitungspfade zu den separaten Masseanschlüssen innerhalb des Steuergeräts wieder zu einer geringeren Anzahl Leitungspfaden, in der Regel zu einem gemeinsamen Massepfad zusammengefasst. Dies kann zweckmäßigerweise über die bereits erwähnte elektrische ODER-Verbindung erfolgen. Auf eine innerhalb des Steuergeräts redundante Versorgung kann häufig aufgrund der erheblich selteneren Massefehler vorteilhafterweise verzichtet werden.

Bevorzugt sind sowohl die Versorgungsanschlüsse erster Art als auch die Versorgungsanschlüsse zweiter Art mindestens einfach redundant (doppelt oder mehrfach) ausgeführt.

Weitere bevorzugte Ausführungsformen der Erfindung ergeben sich aus den Unteransprüchen und der nachfolgenden Beschreibung anhand von Figuren.

Es zeigen
- Fig. 1: ein Bremsensteuergerät mit integrierter Ansteuerung und redundanter Logik(plus)versorgung für eine Feststellbremse mit einem gemeinsamen Masseanschluss,
- Fig. 2: ein Steuergerät entsprechend Fig. 1 jedoch mit zwei Masseanschlüssen und einem Massemultiplexer zur Umschaltung bei Verlust einer Masseleitung und separaten Plus-Versorgungsanschlüssen für alle Funktionselemente,
- Fig. 3: ein Steuergerät entsprechend Fig. 2 mit gegenüber Fig. 2 reduzierter Zahl Plus-Versorgungsanschlüsse, jedoch redundanter Versorgung von Logikschaltkreis und Feststellbremsansteuerung und
- Fig. 4: ein Steuergerät entsprechend Fig. 3 mit zwei Hochstrom-Masseanschlüssen ohne Erkennungsschaltung für eine einzelne Masseleitungsunterbrechung mit redundanter Logikversorgung sowie redundanter Feststellbremsansteuerung.

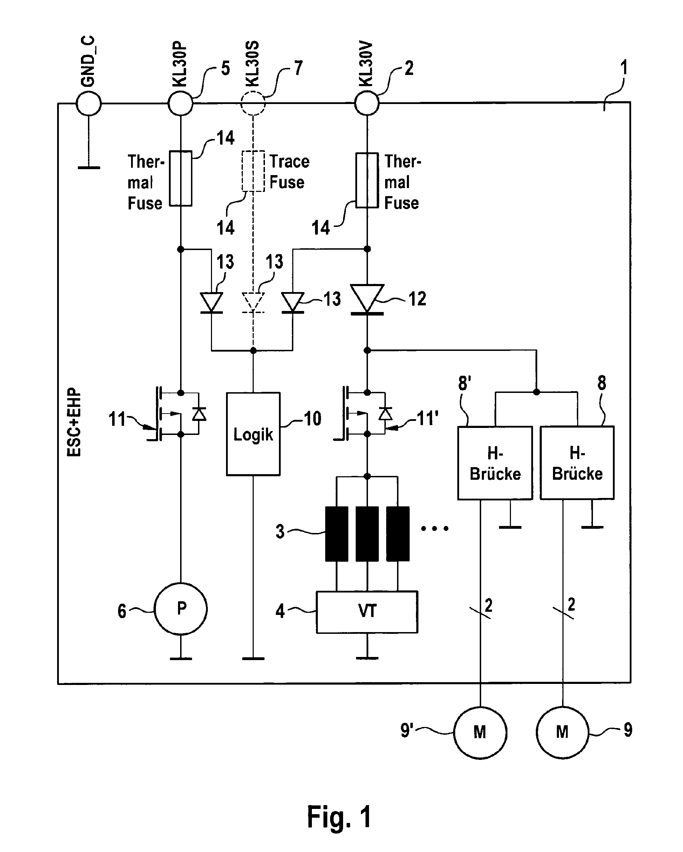

Fig. 1 zeigt ein ESC-Steuergerät 1 mit integrierter Feststellbremsansteuerung mit einer KL30V-Plus-Versorgungsleitung 2 für die Versorgung von elektromagnetischen Hydraulikventilen eines elektrohydraulischen Bremssystems (Ventile 3 und Ventiltreiber 4) und gleichzeitiger Versorgung einer elektrischen oder elektrohydraulischen Feststellbremse, umfassend unter anderem zwei H-Brücken 8, 8' sowie zwei außerhalb des Steuergeräts angeordnete Feststellbremsmotore 9 und 9'. Das Bezugspotential GND_C wird gemeinsam genutzt und ist daher so ausgelegt, dass der Strom für beide Bremsfunktionen dauerhaft getragen werden kann.

Die Spannungsversorgung für die Logikschaltkreise 10 erfolgt redundant aus KL30P 5 und KL30V 2. Die gepunktete Verbindung zu KL30S 7 stellt eine optionale Möglichkeit einer dreifach redundanten Logikversorgung dar, wobei prinzipiell eine beliebige Kopplung der drei Anschlüsse 5, 2 und 7 mit Logikschaltkreis 10 möglich ist, wenn dabei zumindest zwei dieser Anschlüsse zur Bildung von Redundanz gekoppelt sind. Die Versorgung der gemeinsam genutzten Logikschaltkreis 10 ist somit zwei- oder dreifach redundant ausgeführt. Logikschaltkreis 10 enthält eine zumindest teilweise digitale Schaltung mit insbesondere einer digitalen Recheneinheit, zur Steuerung/ Regelung der Bremsenfunktion und der Feststellbremsfunktion. Durch Zuführen der Versorgungsströme von den Klemmen KL30P, KL30V oder optional KL30S über Dioden 13 ergibt sich eine ODER-Verknüpfung der Versorgungspfade in der Weise, dass bei einem Ausfall eines Pfades der verbleibende Pfad bzw. die verbleibenden Pfade die Versorgung der Logikschaltkreis 10 alleine übernehmen können.

Die mit einem positiven Potential beaufschlagten Leistungsversorgungspfade an Klemmen KL30P (Pumpe) und KL30V (Ventile) enthalten zweckmäßigerweise elektronische Schutzbauelemente 14. Als besonders geeignet haben sich hierzu thermisch auslösende Schutzbauelemente, wie zum Beispiel Schmelzbrücken erwiesen (kein Auslösen bei einem Überstrom innerhalb der üblichen Grenze), die im Gegensatz zu herkömmlichen Sicherungen bei einer sehr hohen Überschreitung der Leiterplattentemperatur (z.B. bei einem Leiterplattenbrand) eine Unterbrechung der Stromzufuhr bewirken.

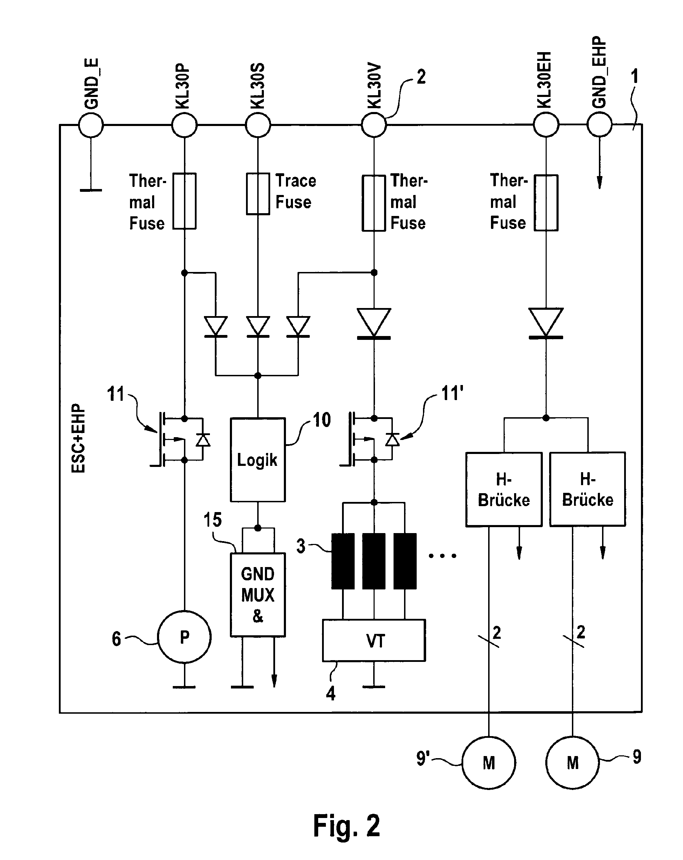

Fig. 2 zeigt ein Bremsensteuergerät, bei dem die GND-Versorgung des Steuergeräts 1 über Anschlüsse GND_EHP (für EHP) und GND_E (für das Bremssystem) getrennt ist. Beide Masseanschlüsse sind für den Transport von hohen Strömen ausgelegt. Die Versorgung von Logikschaltkreis 10 erfolgt auch hier redundant über eine steuergeräteinterne Verknüpfung beider Masseanschlüsse GND_EHP und GND_E (optional auch über Anschluss KL30S).

Bei einem Fehler auf einer GND-Versorgung GND_E oder GND_EHP, fällt entweder nur ein Schaltungsteil (ESC oder Feststellbremse) aus, wobei jedoch der gemeinsam genutzte Logikschaltkreis 10 versorgt bleibt oder die verbleibende Masse wird durch einen Anschlussmultiplexer 15 (GND MUX) an alle Schaltungsteile verteilt. Die Unterbrechung einer Masseverbindung wird allerdings vom Anschlussmultiplexer 15 detektiert und als Fehlersignal ausgegeben.

Die Versorgung der Festellbremsaktuatorik mit positiver Spannung erfolgt bei der Schaltung in Fig. 2 über einen separaten Leistungspfad, der mit Klemme KL30EH verbunden ist.

Anschlussmultiplexer 15 kann alternativ oder gemeinsam zur Logikversorgung herangezogen werden. Anschlussmultiplexer 15 ist hierzu mit Logikschaltkreis 10 und den beiden Massen GND_E sowie GND_EHP verbunden, wobei dieser bei Bedarf im Leistungspfad angeordnet werden kann, so dass eine (ggf. nur behelfsmäßige oder vollständig detektierbare) Leistungs-Masseversorgung (Verteilung) jeweils des anderen Leistungspfads (ESC oder Elektrohydraulische Feststellbremse) ermöglicht wird.

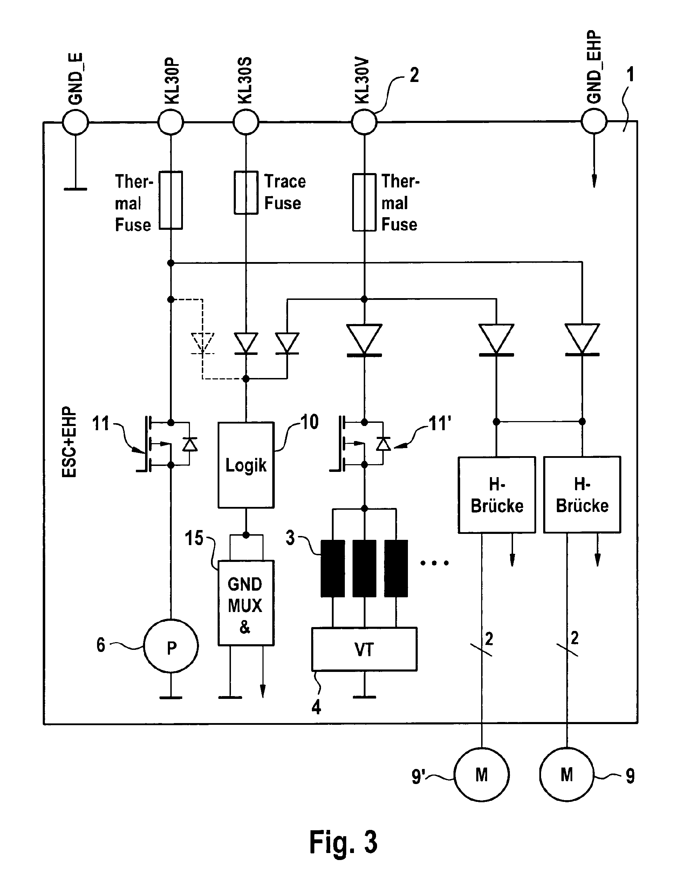

Fig. 3 zeigt ein Bremsensteuergerät mit den für ESC-Bremsensteuergeräte üblichen KL30V und KL30P Leistungsversorgungen.

Gemäß dem hier dargestellten Ausführungsbeispiel erfolgt die Feststellbremsleistungsversorgung somit aus mehr als einer Leistungsversorgungsleitung des Bremsensteuergerätes (z.B. der Ventilversorgung und Pumpenversorgung), so dass auch hier trotz verringerter Klemmenzahl eine zusätzliche redundante Versorgung der Feststellbremse erhalten wird.

Die Masseversorgung ist wie in Fig. 2 über Anschlüsse GND_EHP für die Feststellbremse und GND_E für das Bremssystem getrennt ausgeführt. Wie in Fig. 2 ist ein mit den beiden Masseanschlüssen GND_E und GND_EHO verbundener Anschlussmultiplexer 15 (GND MUX) alternativ oder gemeinsam zur Versorgung von Logikschaltkreis 10 vorgesehen. Auch hier besteht alternativ die Möglichkeit, Anschlussmultiplexer 15 im Leistungspfad anzuordnen.

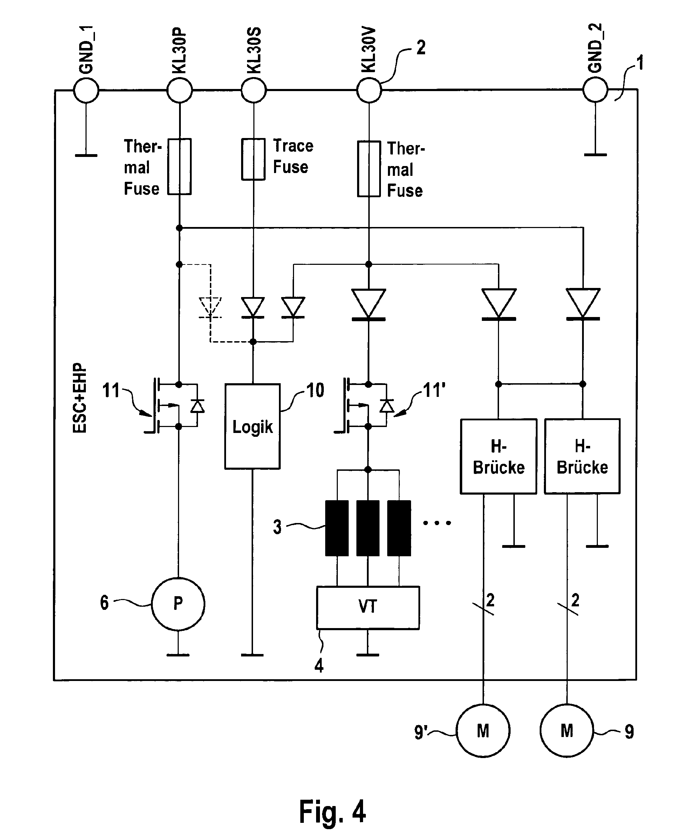

Fig. 4 entspricht weitestgehend dem Bremsensteuergerät in Fig. 3, wobei hier bezüglich der Stromtragfähigkeit zwei gleichwertige, und daher vollwertig redundanten Masseanschlüsse GND_1 und GND_2 vorgesehen sind, die den uneingeschränkten Betrieb des Gesamtsystems auch lediglich mit nur einem Masseanschluss ermöglichen. Im Inneren des Steuergeräts sind die Masseanschlüsse niederohmig zu einem gemeinsamen internen Massepfad verbunden. Bei einer Schaltung gemäß dem vorliegenden Ausführungsbeispiel ist eine Erkennung einer Masseunterbrechung nicht ohne weiteres möglich, wobei dies auch für den sicheren Betrieb einer Schaltung wie hier dargestellt wegen der ausreichenden Auslegung beider Masseanschlüsse nicht unbedingt erforderlich ist.

## Patentansprüche

1. Bremsensteuergerät (1) zur Ansteuerung und/oder Regelung von Aktuatoren (3,6) zur Beeinflussung einer Bremsfunktion eines Kraftfahrzeugs mit mindestens der Funktionsgruppe Logikschaltkreis (10), mit der mindestens eine Bremsfunktion (3,4,6) gesteuert und/oder geregelt wird, wobei das Steuergerät mindestens eine Funktion eines elektronischen Bremssystems (3,4,6) und eine Feststellbremsfunktion (8,8',9,9') steuert, wobei dieses elektrische Versorgungsanschlüsse zumindest erster Art (GND_C, GND_E, GND_EHP, GND_1, GND_2) und zweiter Art (KL30P, KL30S, KL30V, KL30EH) umfasst und wobei mindestens ein Versorgungsanschluss erster Art mit einem Bezugspotential verbunden ist und mindestens ein Versorgungsanschluss zweiter Art mit einem gegenüber dem Bezugspotential verschiedenen Potential verbunden ist, wobei mindestens ein Versorgungsanschluss erster Art oder mindestens ein Versorgungsanschluss zweiter Art zur Versorgung
- mit mindestens eine Funktionselement oder -gruppe zur Ansteuerung
und/oder Regelung der Funktion des elektronischen Bremssystems und mit mindestens einem Funktionselement oder -gruppe
zur Ansteuerung und/oder Regelung der Feststellbremsfunktion, und
- mit mindestens einem Funktionselement oder -gruppe zur Ansteuerung
und/oder Regelung der Funktion des elektronischen Bremssystems und der Feststellbremsfunktion elektrisch verbunden ist, wobei der Logikschaltkreis (10) sowohl die Funktion des elektronischen Bremssystems als auch die der Feststellbremsfunktion steuert und/oder regelt und der Logikschaltkreis (10) über zwei oder mehrere Versorgungsanschlüsse jeweils erster oder zweiter Art (KL30P, KL30S, KL30V, KL30EH) versorgt wird, so dass bei Ausfall einer der an den Anschlüssen angeschlossenen Versorgungsleitungen der Logikschaltkreis weiter versorgt ist und wobei Logikschaltung (10) eine zumindest teilweise digitale Schaltung, mit insbesondere einer digitalen Recheneinheit, zur Steuerung/Regelung der Bremsenfunktion und der Feststellbremsfunktion enthält.

2. Bremsensteuergerät nach Anspruch 1, **dadurch gekennzeichnet, dass** der Versorgungsanschluss zweiter Art mit elektrischen Versorgungspfaden auf einem Leitbahnträger des Bremsensteuergeräts verbunden sind, wobei diese mindestens einen Hochstromversorgungspfad zur Versorgung einer Last (6, 9, 9') und einen Niedrigstromversorgungspfad zur Versorgung zumindest eines Logikschaltkreises (10) umfassen.

3. Bremsensteuergerät nach Anspruch 1 oder 2, **dadurch gekennzeichnet, dass** mindestens zwei Versorgungsanschlüsse der ersten Art (GND_C, GND_E, GND_EHP, GND_1, GND_2) und/oder mindestens zwei Versorgungsanschlüsse der zweiten Art (KL30P, KL30S, KL30V, KL30EH) vorhanden sind.

4. Bremsensteuergerät nach mindestens einem der Ansprüche 1 bis 3, **dadurch gekennzeichnet, dass** das Bremsensteuergerät zumindest einen Versorgungsanschluss für den Motor einer Hydraulikpumpe (KL30P) der Betriebsbremse umfasst, welcher zusätzlich als Versorgungsanschluss für die elektrische oder elektrohydraulische Feststellbremse oder deren Ansteuerelemente genutzt wird, wobei insbesondere bei Ausfall der daran angeschlossenen Versorgungsleitung eine Versorgung der Feststellbremse oder deren Ansteuerelemente über einen anderen Versorgungspfad erfolgt.

5. Bremsensteuergerät nach mindestens einem der Ansprüche 1 bis 4, **dadurch gekennzeichnet, dass** das Bremsensteuergerät zumindest einen Versorgungsanschluss für die elektromagnetischen Ventile der Betriebsbremse umfasst, welcher zusätzlich als Versorgungsanschluss für die elektrische oder elektrohydraulische Feststellbremse oder deren Ansteuerelemente genutzt wird, wobei insbesondere bei Ausfall der daran angeschlossenen Versorgungsleitung eine Versorgung der Feststellbremse oder deren Ansteuerelemente über einen anderen Versorgungspfad erfolgt.

6. Bremsensteuergerät nach mindestens einem der Ansprüche 1 bis 5, **dadurch gekennzeichnet, dass** der Versorgungsanschluss der Steuer-/Regelelektronik der Betriebsbremse (KL30S) gleichzeitig als Versorgungsanschluss für eine integrierte elektrische Feststellbremse oder deren Ansteuerelemente genutzt wird, wobei insbesondere bei Ausfall der daran angeschlossenen Versorgungsleitung eine Versorgung der Feststellbremse oder deren Ansteuerelemente über einen anderen Versorgungspfad erfolgt.

7. Bremsensteuergerät nach mindestens einem der Ansprüche 1 bis 6, **dadurch gekennzeichnet, dass** die Spannungsversorgung des mindestens einen Logikschaltkreises (10) entweder über mindestens zwei Versorgungsanschlüsse, zwischen denen bei einem Fehler in der Versorgung umgeschaltet wird, erfolgt, oder es erfolgt eine ständige Versorgung des Logikschaltkreises (10) über mindestens zwei Versorgungsanschlüsse, die insbesondere ODER-verknüpft sind.

8. Bremsensteuergerät nach mindestens einem der Ansprüche 1 bis 7, **dadurch gekennzeichnet, dass** mindestens zwei Masseanschlüsse oder Massepfade vorhanden sind, von denen jeder hinsichtlich der Stromtragfähigkeit derart ausreichend dimensioniert ist, dass das gesamte Steuergerät im zulässigen Versorgungsspannungsbereich hinreichend versorgt werden kann.

9. Bremsensteuergerät nach mindestens einem der Ansprüche 1 bis 8, **dadurch gekennzeichnet, dass** dieses an die Versorgungsanschlüsse zweiter Art angeschlossene Hochstrompfade (KL30P, KL30V, KL30EH) umfasst, welche die Leistungskomponenten (3, 6, 9, 9') versorgen, wobei innerhalb des Steuergeräts zumindest in einem oder auch in mehreren oder allen Hochstrompfaden, insbesondere redundante, elektronische Abschaltelemente (11, 11') vorgesehen sind.

10. Bremsensteuergerät nach mindestens einem der Ansprüche 1 bis 8, **gekennzeichnet durch** einen Anschlussmultiplexer (15), welcher einen Versorgungspfad von Masseanschlüssen trennt und/oder diesen mit unterschiedlichen Masseanschlüssen verbindet und/oder für eine Verteilung des Stroms auf die verbliebenen, verfügbaren Masseanschlüsse sorgt.

11. Bremsensteuergerät nach mindestens einem der Ansprüche 1 bis 10, **gekennzeichnet durch** eine Erkennungsschaltung, welche insbesondere in dem Anschlussmultiplexer (15) gemäß Anspruch 10 enthalten ist, mit der eine Unterbrechung in einer oder mehreren Versorgungsleitungen an den Anschlüssen erster oder zweiter Art detektiert wird.

## Claims

1. Brake control device (1) for driving and/or controlling actuators (3, 6) for influencing a braking function of a motor vehicle, having at least the function group logic circuit (10) with which open-loop and/or closed-loop control is performed on at least one braking function (3, 4, 6), wherein the control device controls at least one function of an electronic brake system (3, 4, 6) and a parking braking function (8, 8', 9, 9'), wherein the said control device comprises electric supply connections of at least a first type (GND_C, GND_E, GND_EHP, GND_1, GND_2) and a second type (KL30P, KL30S, KL30V, KL30EH), and wherein at least one supply connection of the first type is connected to a reference potential, and at least one supply connection of the second type is connected to a potential which is different than the reference potential, wherein at least one supply connection of the first type or at least one supply connection of the second type is electrically connected for supply purposes
- to at least one function element or group for driving and/or controlling the function of the electronic brake system and to at least one function element or group for driving and/or controlling the parking braking function, and
- to at least one function element or group for driving and/or controlling the function of the electronic brake system and the parking braking function, wherein the logic circuit (10) performs open-loop and/or closed-loop control both on the function of the electronic brake system and on that of the parking braking function and the logic circuit (10) is supplied via two or more supply connections respectively of the first or second type (KL30P, KL30S, KL30V, KL30EH) so that in the event of failure of one of the supply lines which are connected to the connections the logic circuit continues to be supplied and wherein logic circuit (10) contains an at least partially digital circuit with, in particular, a digital computing unit, for performing open-loop/closed-loop control of the braking function and the parking braking function.

2. The brake control device according to Claim 1, **characterized in that** the supply connection of the second type is connected to electric supply paths on a conductor track carrier of the brake control device, wherein said supply paths comprise at least one high current supply path for supplying a load (6, 9, 9') and one low current supply path for supplying at least one logic circuit (10).

3. Brake control device according to Claim 1 or 2, **characterized in that** at least two supply connections of the first type (GND_C, GND_E, GND_EHP, GND_1, GND_2) and/or at least two supply connections of the second type (KL30P, KL30S, KL30V, KL30EH) are present.

4. Brake control device according to at least one of Claims 1 to 3, **characterized in that** the brake control device comprises at least one supply connection for the motor of a hydraulic pump (KL30P) of the service brake, which supply connection is additionally used as a supply connection for the electric or electrohydraulic parking brake or the drive elements thereof, wherein in particular in the event of failure of the supply line which is connected thereto the parking brake or the drive elements thereof are supplied via another supply path.

5. Brake control device according to at least one of Claims 1 to 4, **characterized in that** the brake control device comprises at least one supply connection for the electromagnetic valves of the service brake, which supply connection is additionally used as a supply connection for the electric or electrohydraulic parking brake or the drive elements thereof, wherein in particular in the event of failure of the supply line which is connected thereto the parking brake or the drive elements thereof are supplied via another supply path.

6. Brake control device according to at least one of Claims 1 to 5, **characterized in that** the supply connection of the open-loop/closed-loop electronics of the service brake (KL30S) is simultaneously used as a supply connection for an integrated electric parking brake or the drive elements thereof, wherein in particular in the event of failure of the supply line which is connected thereto the parking brake or the drive elements thereof are supplied via another supply path.

7. Brake control device according to at least one of Claims 1 to 6, **characterized in that** the at least one logic circuit (10) is supplied with voltage either via at least two supply connections between which the switching over of the supply is performed in the event of a fault, or continuous supply of the logic circuit (10) occurs via at least two supply connections, which are in particular linked by a logic OR.

8. Brake control device according to at least one of Claims 1 to 7, **characterized in that** at least two ground connections or ground paths are present, each of which is sufficiently dimensioned in terms of the current carrying capacity in such a way that the entire control device can be sufficiently supplied in the permissible supply voltage range.

9. Brake control device according to at least one of Claims 1 to 8, **characterized in that** the latter comprises high current paths (KL30P, KL30V, KL30EH) which are connected to the supply connections of the second type and which supply the power components (3, 6, 9, 9'), wherein in particular redundant, electronic deactivation elements (11, 11') are provided within the control device, at least in one or more high current paths or in all the high current paths.

10. Brake control device according to at least one of Claims 1 to 8, **characterized by** a connection multiplexer (15) which disconnects a supply path from ground connections and/or connects said supply path to different ground connections and/or carries out distribution of the current among the remaining available ground connections.

11. Brake control device according to at least one of Claims 1 to 10, **characterized by** a detection circuit which is contained, in particular, in the connection multiplexer (15) according to Claim 10, with which detection circuit a disconnection in one or more supply lines at the connections of the first or second type is detected.

## Revendications

1. Contrôleur de frein (1) destiné à commander et/ou à réguler des actionneurs (3, 6) en vue d'influencer une fonction de freinage d'un véhicule automobile, comprenant au moins le groupe fonctionnel relais logique tout ou rien (10), avec lequel au moins une fonction de freinage (3, 4, 6) est commandée et/ou régulée, le contrôleur commandant au moins une fonction d'un système de freinage électronique (3, 4, 6) et une fonction de frein de stationnement (8, 8', 9, 9'), celui-ci comprenant des bornes d'alimentation électriques au moins d'un premier type (GND_C, GND_E, GND_EHP, GND_1, GND_2) et d'un deuxième type (KL30P, KL30S, KL30V, KL30EH) et au moins une borne d'alimentation du premier type étant reliée à un potentiel de référence et au moins une borne d'alimentation du deuxième type étant reliée à un deuxième potentiel différent du potentiel de référence, au moins une borne d'alimentation du premier type ou au moins une borne d'alimentation du deuxième type étant reliée électriquement, en vue de l'alimentation,
- à au moins un élément ou groupe fonctionnel destiné à commander et/ou réguler la fonction du système de freinage électronique et à au moins un élément ou groupe fonctionnel destiné à commander et/ou réguler la fonction de frein de stationnement, et
- à au moins un élément ou groupe fonctionnel destiné à commander et/ou réguler la fonction du système de freinage électronique et la fonction de frein de stationnement, le circuit logique tout ou rien (10) commandant et/ou régulant à la fois la fonction du système de freinage électronique et la fonction de frein de stationnement et le circuit logique tout ou rien (10) étant alimenté par le biais de deux bornes d'alimentation ou plus, respectivement du premier ou du deuxième type (KL30P, KL30S, KL30V, KL30EH), de sorte qu'en cas de défaillance de l'une des lignes d'alimentation raccordées aux bornes, le circuit logique tout ou rien continue d'être alimenté, et le circuit logique tout ou rien (10) contenant un circuit au moins partiellement numérique, notamment une unité de calcul numérique destinée à commander/réguler la fonction de freinage et la fonction de frein de stationnement.

2. Contrôleur de frein selon la revendication 1, **caractérisé en ce que** les bornes d'alimentation du deuxième type sont reliées à des chemins d'alimentation électrique sur un support de pistes conductrices du contrôleur de frein, ceux-ci comprenant au moins un chemin d'alimentation à courant fort destiné à alimenter une charge (6, 9, 9') et un chemin d'alimentation à courant faible destiné à alimenter au moins un circuit logique tout ou rien (10).

3. Contrôleur de frein selon la revendication 1 ou 2, **caractérisé en ce qu'**au moins deux bornes d'alimentation du premier type (GND_C, GND_E, GND_EHP, GND_1, GND_2) et/ou au moins deux bornes d'alimentation du deuxième type (KL30P, KL30S, KL30V, KL30EH) sont présentes.

4. Contrôleur de frein selon au moins l'une des revendications 1 à 3, **caractérisé en ce que** le contrôleur de frein comprend au moins une borne d'alimentation pour le moteur d'une pompe hydraulique (KL30P) du frein de service, laquelle est en plus utilisée comme borne d'alimentation pour le frein de stationnement électrique ou électro-hydraulique ou ses éléments de commande et, notamment en cas de défaillance de la ligne d'alimentation qui y est raccordée, une alimentation du frein de stationnement ou de ses éléments de commande s'effectuant par le biais d'un autre chemin d'alimentation.

5. Contrôleur de frein selon au moins l'une des revendications 1 à 4, **caractérisé en ce que** le contrôleur de frein comprend au moins une borne d'alimentation pour les vannes électromagnétiques du frein de service, laquelle est en plus utilisée comme borne d'alimentation pour le frein de stationnement électrique ou électro-hydraulique ou ses éléments de commande et, notamment en cas de défaillance de la ligne d'alimentation qui y est raccordée, une alimentation du frein de stationnement ou de ses éléments de commande s'effectuant par le biais d'un autre chemin d'alimentation.

6. Contrôleur de frein selon au moins l'une des revendications 1 à 5, **caractérisé en ce que** la borne d'alimentation de l'électronique de commande/régulation du frein de service (KL30S) est en même temps utilisée comme borne d'alimentation pour un frein de stationnement électrique intégré ou ses éléments de commande et, notamment en cas de défaillance de la ligne d'alimentation qui y est raccordée, une alimentation du frein de stationnement ou de ses éléments de commande s'effectuant par le biais d'un autre chemin d'alimentation.

7. Contrôleur de frein selon au moins l'une des revendications 1 à 6, **caractérisé en ce que** l'alimentation électrique de l'au moins un circuit logique tout ou rien (10) s'effectue soit par le biais d'au moins deux bornes d'alimentation entre lesquelles a lieu une inversion en cas de défaut dans l'alimentation, soit le circuit logique tout ou rien (10) est alimenté continuellement par le biais d'au moins deux bornes d'alimentation qui sont notamment liées par la fonction logique OU.

8. Contrôleur de frein selon au moins l'une des revendications 1 à 7, **caractérisé en ce qu'**il existe au moins deux bornes de masse ou chemins de masse, dont chacun est suffisamment dimensionné du point de vue de la capacité de courant pour que l'ensemble du contrôleur puisse être suffisamment alimenté dans la plage de tensions d'alimentation admissible.

9. Contrôleur de frein selon au moins l'une des revendications 1 à 8, **caractérisé en ce que** celui-ci comprend des chemins à courant fort (KL30P, KL30V, KL30EH) raccordés aux bornes d'alimentation du deuxième type, lesquels alimentent les composants de puissance (3, 6, 9, 9'), des éléments de coupure électroniques (11, 11'), notamment redondants, étant présents à l'intérieur du contrôleur au moins dans l'un ou aussi dans plusieurs ou dans tous les chemins à courant fort.

10. Contrôleur de frein selon au moins l'une des revendications 1 à 8, **caractérisé par** un multiplexeur de borne (15) qui déconnecte un chemin d'alimentation des bornes de masse et/ou relie celui-ci à des bornes de masse différentes et/ou veille à la distribution du courant sur les bornes de masse disponibles restantes.

11. Contrôleur de frein selon au moins l'une des revendications 1 à 10, **caractérisé par** un circuit de reconnaissance qui est notamment contenu dans le multiplexeur de borne (15) selon la revendication 10, avec lequel est détectée une interruption dans une ou plusieurs lignes d'alimentation au niveau des bornes du premier ou du deuxième type.
